# EUROPÄISCHE PATENTSCHRIFT

(11) **EP 4 511 268 B1**
(45) Veröffentlichungstag und Bekanntmachung des Hinweises auf die Patenterteilung: **26.11.2025**
(21) Anmeldenummer: 23720302.1
(22) Anmeldetag: 21.04.2023
(51) Int. Cl.: B60W 50/14

(54) **FAHRERASSISTENZSYSTEM UND FAHRERASSISTENZVERFAHREN FÜR EIN FAHRZEUG**
DRIVER ASSISTANCE SYSTEM AND DRIVER ASSISTANCE METHOD FOR A VEHICLE
SYSTÈME ET PROCÉDÉ D'AIDE À LA CONDUITE POUR UN VÉHICULE

(30) Priorität: 22.04.2022 DE 102022109811
(43) Veröffentlichungstag der Anmeldung: 26.02.2025
(73) Patentinhaber: Bayerische Motoren Werke Aktiengesellschaft, 80809 München (DE)
(72) Erfinder: NAUJOKS, Frederik, 81371 München (DE); FORSTER, Yannick, 81825 München (DE)
(86) Internationale Anmeldenummer: PCT/EP2023/060422
(87) Internationale Veröffentlichungsnummer: WO 2023/203193

(56) Entgegenhaltungen:
- DE-A1- 102015 224 555
- DE-A1- 102019 215 308
- US-A1- 2019 283 764
- US-A1- 2021 347 365
- US-B1- 10 752 253

## Beschreibung

Die vorliegende Offenbarung betrifft ein Fahrerassistenzsystem für ein Fahrzeug, ein Fahrzeug mit einem solchen Fahrerassistenzsystem, ein Fahrerassistenzverfahren für ein Fahrzeug und ein Speichermedium zum Ausführen des Fahrerassistenzverfahrens. Die vorliegende Offenbarung betrifft insbesondere eine Vermeidung einer negativen Verhaltensanpassung eines Fahrers an eine Funktionsweise eines Fahrerüberwachungssystem.

### Stand der Technik

In modernen Fahrzeugen werden zunehmend Fahrerüberwachungssysteme ("Driver Monitoring Systems", DMS) verbaut, die einen Fahrer mit einer Innenraumkamera überwachen und zum Beispiel eine Warnung ausgeben, wenn der Fahrer längere Zeit nicht auf die Straße blickt.

Beispielsweise ist in der DE 10 2019 215 308 A1 ein Verfahren zum Freischalten und/oder Anpassen einer automatisierten Fahrfunktion für ein zumindest teilautomatisiert betreibbares Fahrzeug beschrieben, mit den Schritten: Identifizieren eines Fahrers; Prüfen eines Erfahrungsstands des identifizierten Fahrers; und Freischalten und/oder Anpassen der automatisierten Fahrfunktion basierend auf dem Erfahrungsstand des Fahrers. Dabei kann der Erfahrungsstand in Abhängigkeit davon angepasst werden, ob der Fahrer das Fahrgeschehen aufmerksam beobachtet, auch wenn er nicht aktiv in die Fahrzeugsteuerung eingreift. Um dies zu überprüfen, wird die Blickrichtung des Fahrers ein ausgewertet. Je nachdem, ob der Fahrer seinen Blick und somit seine Aufmerksamkeit primär auf die Straße oder primär auf andere Dinge richtet, kann der Erfahrungsstand angepasst werden. Ergibt eine Auswertung der Blickrichtung, dass der Fahrer sich an die vorgegebenen maximalen "Unachtsamkeitszeiten" hält und trotz aktivierter Hands-Free-Fahrfunktion zuverlässig die vorausliegende Straße beobachtet, so kann der Erfahrungsstand angehoben werden. Wird ermittelt, dass der Fahrer nicht aufmerksam genug die Fahrsituation überwacht und werden beispielsweise "Unachtsamkeitszeiten" mehrfach überschritten, kann entsprechende eine Herabstufung des Erfahrungsstands erfolgen.

Derartige Fahrerüberwachungssysteme sollen eine Sicherheit im Straßenverkehr erhöhen.

Mit der Zeit kann allerdings eine Verhaltensanpassung des Fahrers an das Fahrerüberwachungssystem erfolgen, beispielsweise indem der Fahrer mit der Zeit ein Blickverhalten an den Schwellwert des Fahrerüberwachungssystems zur Ausgabe einer Warnung anpasst. Beispielsweise kann sich der Fahrer an eine Warnung nach drei Sekunden gewöhnen und den Zeitraum bis zur Warnung zunehmend ausreizen. Im Ergebnis blickt der Fahrer mit der Zeit länger von der Straße weg, wodurch es zu gefährlichen Situationen im Straßenverkehr kommen kann.

### Offenbarung der Erfindung

Es ist eine Aufgabe der vorliegenden Offenbarung, ein Fahrerassistenzsystem für ein Fahrzeug, ein Fahrzeug mit einem solchen Fahrerassistenzsystem, ein Fahrerassistenzverfahren für ein Fahrzeug und ein Speichermedium zum Ausführen des Fahrerassistenzverfahrens anzugeben, die eine negative Verhaltensanpassung eines Fahrers an eine Funktionsweise einer Fahrerüberwachung verhindern können. Insbesondere ist es eine Aufgabe der vorliegenden Offenbarung, eine Sicherheit im Straßenverkehr durch Vermeidung kritischer Situationen aufgrund eines Fahrerverhaltens zu verbessern.

Diese Aufgabe wird durch den Gegenstand der unabhängigen Ansprüche gelöst. Vorteilhafte Ausgestaltungen sind in den Unteransprüchen angegeben.

Gemäß einem unabhängigen Aspekt der vorliegenden Offenbarung ist ein Fahrerassistenzsystem für ein Fahrzeug, insbesondere ein Kraftfahrzeug, angegeben. Das Fahrerassistenzsystem umfasst wenigstens ein Fahrererfassungsmodul, das eingerichtet ist, um einen Fahrer zu erfassen und Erfassungsdaten bereitzustellen; und wenigstens ein Prozessormodul. Das wenigstens eine Prozessormodul ist eingerichtet, um: basierend auf den Erfassungsdaten eine Vielzahl von Einzelblicken des Fahrers weg von einer Referenzblickrichtung zu erkennen; für jeden Einzelblick der Vielzahl von Einzelblicken eine entsprechende Blickzeitdauer zu bestimmen; eine Änderung der Blickzeitdauer über die Zeit und in Bezug auf einen Schwellwert zu erkennen; und wenigstens eine Fahrzeugfunktion basierend auf der erkannten Änderung der Blickzeitdauer anzusteuern.

Das wenigstens eine Fahrererfassungsmodul und das wenigstens eine Prozessormodul können in einem gemeinsamen Software- und/oder Hardware-Modul realisiert sein. Alternativ dazu können das wenigstens eine Fahrererfassungsmodul und das wenigstens eine Prozessormodul jeweils in getrennten Software- und/oder Hardware-Modulen realisiert sein.

Erfindungsgemäß erfolgt eine Überwachung einer Blickzeitdauer des Fahrers z.B. weg von der Straße. Falls eine Änderung der Blickzeitdauer erkannt wird, beispielsweise da sich die Blickzeitdauer an einen Schwellwert zur Ausgabe von Fahrerhinweisen bzw. Warnungen angleicht, können geeignete Gegenmaßnahmen ergriffen werden. Zum Beispiel kann der Schwellwert zur Ausgabe von Fahrerhinweisen variiert werden, so dass sich der Fahrer nicht mehr darauf verlassen kann, dass die Fahrerhinweise nach einer bestimmten Zeit ausgegeben werden. Damit kann sichergestellt werden, dass keine negative Verhaltensanpassung des Fahrers an die Funktionsweise des Fahrerassistenzsystems erfolgt. Im Ergebnis kann eine Sicherheit im Straßenverkehr verbessert werden.

Vorzugsweise umfasst das wenigstens eine Fahrererfassungsmodul wenigstens einen Sensor, der eingerichtet ist, um den Fahrer zu erfassen und die Erfassungsdaten bereitzustellen. Der wenigstens eine Sensor kann ein optischer Sensor sein, wie zum Beispiel eine Kamera, insbesondere eine Innenraumkamera. Optional kann das wenigstens eine Fahrererfassungsmodul wenigstens eine Lichtquelle umfassen. Die Lichtquelle kann in einigen Ausführungsformen eine Infrarotlichtquelle sein, und der wenigstens eine Sensor kann ein Infrarotsensor, wie zum Beispiel eine Infrarotkamera, sein.

Das wenigstens eine Prozessormodul ist eingerichtet, um die durch das wenigstens eine Fahrererfassungsmodul bereitgestellten Erfassungsdaten, wie zum Beispiel Bilddaten, auszuwerten. Durch das Auswerten der Erfassungsdaten ist insbesondere Blickrichtung des Fahrers erfassbar bzw. bestimmbar.

Das wenigstens eine Prozessormodul bestimmt, ob die Blickrichtung des Fahrers von einer Referenzblickrichtung abweicht. Vorzugsweise ist die Referenzblickrichtung eine Blickrichtung auf eine vor dem Fahrzeug liegende Fahrbahn. Falls die Blickrichtung des Fahrers von der Referenzblickrichtung abweicht, also wenn der Fahrer von der Straße wegblickt, kann dieses Ereignis als Einzelblick mit einer bestimmten Blickzeitdauer erkannt werden. Die Blickzeitdauer kann dabei angeben, wie lange der Fahrer nicht in die Referenzblickrichtung sieht bzw. wie lange der Fahrer von der Referenzblickrichtung wegsieht.

Das wenigstens eine Prozessormodul bestimmt, ob eine Änderung der Blickzeitdauer über die Zeit und in Bezug auf einen Schwellwert vorliegt. Insbesondere kann das Prozessormodul bestimmen, ob sich die Blickzeitdauer mit der Zeit, also über eine Sequenz von Einzelblicken weg von der Referenzblickrichtung, an den Schwellwert annähert. Falls eine derartige Änderung der Blickzeitdauer erkannt wird, steuert das Prozessormodul wenigstens eine Fahrzeugfunktion an, um der erkannten Änderung, die eine negative Verhaltensanpassung des Fahrers an die Funktionsweise des Fahrerassistenzsystems anzeigt, entgegenzuwirken.

Die Änderung der Blickzeitdauer kann erkannt und/oder das Ansteuern der wenigstens einen Fahrzeugfunktion durchgeführt werden, wenn die Änderung wenigstens ein vorgegebenes Kriterium erfüllt. Das wenigstens eine vorgegebene Kriterium kann aus der Gruppe ausgewählt sein, die eine Richtung der Änderung der Blickzeitdauer in Bezug auf den Schwellwert (z.B. eine Richtung der Blickzeitdauer hin zum Schwellwert, d.h. eine Annäherung an den Schwellwert), eine Rate der Änderung der Blickzeitdauer (z.B. eine Schnelligkeit der Änderung der Blickzeitdauer) und einen Abstand zum Schwellwert (z.B. eine geschätzte Zeit bis zum näherungsweisen Erreichen des Schwellwerts und/oder ein relativer Abstand (z.B. in % des Schwellwerts; z.B. 10% oder weniger oder 20% oder weniger) und/oder ein absoluter Abstand (z.B. in Sekunden) zum Schwellwert) umfasst, oder die daraus besteht.

Vorzugsweise betrifft oder ist die wenigstens eine Fahrzeugfunktion eine Ausgabe eines Fahrerhinweis an den Fahrer. In einigen Ausführungsformen kann das Fahrerassistenzsystem für eine Überwachung des Fahrers sowie eine Ausgabe eines Fahrerhinweises basierend auf der Überwachung eingerichtet sein. Beispielsweise kann das Fahrerassistenzsystem auf ein risikoreiches Verhalten des Fahrers reagieren und den Fahrer darauf hinweisen, so dass ein Entstehen von gefährlichen Situationen im Straßenverkehr proaktiv verhindert werden kann.

Vorzugsweise ist der Fahrerhinweis ein Warnhinweis, insbesondere in Bezug auf ein durch das Fahrerassistenzsystem erfasste Verhalten des Fahrers, wie zum Beispiel ein zunehmend längeres Wegblicken von der Straße.

Die zeitliche Änderung der Blickzeitdauer wird in Bezug auf einen Schwellwert bestimmt. Beispielsweise kann der Schwellwert drei Sekunden sein, wobei bestimmt werden kann, ob sich die Blickzeitdauer mit der Zeit diesem Schwellwert annähert. Falls sich die Blickzeitdauer mit der Zeit diesem Schwellwert annähert, kann durch das Ansteuern der wenigstens einen Fahrzeugfunktion einer negativen Verhaltensanpassung des Fahrers an die Funktionsweise des Fahrerassistenzsystems effektiv entgegengewirkt werden.

Vorzugsweise gibt der Schwellwert eine Zeitspanne zwischen einem Wegblicken des Fahrers von der Referenzblickrichtung (z.B. der Straße) und dem Ansteuern der wenigstens einen Fahrzeugfunktion, insbesondere dem Ausgeben des Fahrerhinweises, an. Insbesondere kann das Fahrerassistenzsystem eingerichtet sein, um den Fahrerhinweis an den Fahrer auszugeben, wenn eine Blickrichtung des Fahrers während der Fahrt für eine vorgegebene Zeit oder länger (d.h. einer dem Schwellwert entsprechenden Zeit) von der Referenzblickrichtung abweicht. Insbesondere kann das Fahrerassistenzsystem die Referenzblickrichtung mit der Blickrichtung des Fahrers vergleichen und den Fahrerhinweis ausgeben, wenn der Fahrer länger als die dem Schwellwert entsprechende Zeit nicht in die Referenzblickrichtung blickt.

Vorzugsweise ist der Schwellwert zwei Sekunden oder länger, drei Sekunden oder länger, oder vier Sekunden oder länger. In einigen Ausführungsformen kann der Schwellwert drei Sekunden sein.

Vorzugsweise ist das wenigstens eine Prozessormodul weiter eingerichtet, um den Schwellwert von einem ersten Wert auf einen vom ersten Wert verschiedenen zweiten Wert zu ändern, wenn die Änderung der Blickzeitdauer erkannt wird, insbesondere wenn das wenigstens eine Kriterium in Bezug auf die Änderung erfüllt ist. Beispielsweise kann das wenigstens eine Prozessormodul eingerichtet sein, um den Schwellwert vom ersten Wert auf den zweiten Wert zu ändern, wenn sich die Blickzeitdauer in Richtung des Schwellwerts ändert. Anders gesagt kann der Schwellwert z.B. für die Ausgabe des Fahrerhinweises variiert werden, um einer Verhaltensanpassung des Fahrers an den zunächst festen Schwellwert für die Warnungen entgegenzuwirken.

Vorzugsweise ist der zweite Wert größer als der erste Wert (z.B. drei Sekunden). Alternativ kann der zweite Wert kleiner als der erste Wert (z.B. drei Sekunden) sein.

Vorzugsweise ist das wenigstens eine Prozessormodul eingerichtet, um den zweiten Wert zufällig aus einem vorbestimmten Wertebereich auszuwählen. Der vorbestimmte Wertebereich kann zum Beispiel ein Bereich zwischen zwei und vier Sekunden sein. Ergänzend oder alternativ kann der vorbestimmte Wertebereich durch eine Normalverteilung der Einzelblicke weg von der Straße als Funktion der Blickzeitdauer gegeben sein, wie zum Beispiel zwischen zwei und vier Sekunden.

Ergänzend oder alternativ kann das wenigstens eine Prozessormodul eingerichtet sein, um den zweiten Wert basierend auf historischen Blickzeitdauern des Fahrers auszuwählen. Beispielsweise kann das Fahrerassistenzsystem eingerichtet sein, um eine Verteilung der Einzelblicke weg von der Straße als Funktion der Blickzeitdauer zu bestimmen, wobei aus dieser fahrerindividuellen historischen Verteilung der zweite Wert z.B. zufällig ausgewählt werden kann.

Die fahrerindividuelle historische Verteilung kann in einigen Ausführungsformen zu Beginn der Nutzung des Fahrzeugs und/oder des Fahrerassistenzsystems durch den Fahrer bestimmt werden. Beispielsweise kann die fahrerindividuelle historische Verteilung vor einer Aktivierung und/oder Nutzung der Fahrerüberwachung und/oder der Ausgabe der Fahrerhinweise ermittelt werden ("Lernphase").

Vorzugsweise ist das wenigstens eine Prozessormodul weiter eingerichtet, um den Schwellwert vom zweiten Wert zurück auf den ersten Wert zu ändern, wenn eine rückläufige Änderung der Blickzeitdauer erkannt wird. Insbesondere kann überprüft werden, ob die Häufung der Blickzeitdauern um den ursprünglichen Schwellwert über einen definierten Zeitraum rückgängig ist. Ist dies der Fall, kann der ursprüngliche Schwellwert (z.B. drei Sekunden) wieder angenommen werden. Das Fahrerassistenzsystem kann anschließend wieder eine Verschiebung der Blickzeitdauern hin zum Schwellwert überwachen.

Gemäß einem weiteren unabhängigen Aspekt der vorliegenden Offenbarung ist ein Fahrzeug, insbesondere Kraftfahrzeug, angegeben. Das Fahrzeug umfasst das Fahrerassistenzsystem gemäß den Ausführungsformen der vorliegenden Offenbarung.

Der Begriff Fahrzeug umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung.

Gemäß einem weiteren unabhängigen Aspekt der vorliegenden Offenbarung ist ein Fahrerassistenzverfahren für ein Fahrzeug, insbesondere ein Kraftfahrzeug, angegeben. Das Fahrerassistenzverfahren umfasst ein Erkennen einer Vielzahl von Einzelblicken eines Fahrers weg von einer Referenzblickrichtung; ein Bestimmen einer Blickzeitdauer für jeden Einzelblick der Vielzahl von Einzelblicken; ein Erkennen einer Änderung der Blickzeitdauer über die Zeit und in Bezug auf einen Schwellwert; und ein Ansteuern wenigstens einer Fahrzeugfunktion basierend auf der erkannten Änderung der Blickzeitdauer.

Das Fahrerassistenzverfahren kann die Aspekte des in diesem Dokument beschriebenen Fahrerassistenzsystems implementieren.

Gemäß einem weiteren unabhängigen Aspekt der vorliegenden Offenbarung ist ein Software (SW) Programm angegeben. Das SW Programm ist eingerichtet, um auf einem oder mehreren Prozessoren ausgeführt zu werden, und um dadurch das in diesem Dokument beschriebene Fahrerassistenzverfahren auszuführen.

Gemäß einem weiteren unabhängigen Aspekt der vorliegenden Offenbarung ist ein Speichermedium angegeben. Das Speichermedium kann ein SW Programm umfassen, welches eingerichtet ist, um auf einem oder mehreren Prozessoren ausgeführt zu werden, und um dadurch das in diesem Dokument beschriebene Fahrerassistenzverfahren auszuführen.

Ein Prozessor bzw. ein Prozessormodul ist ein programmierbares Rechenwerk, also eine Maschine oder eine elektronische Schaltung, die gemäß übergebenen Befehlen andere Elemente steuert und dabei einen Algorithmus (Prozess) vorantreibt.

### Kurze Beschreibung der Zeichnungen

Ausführungsbeispiele der Offenbarung sind in den Figuren dargestellt und werden im Folgenden näher beschrieben. Es zeigen:
Figur 1 schematisch ein Fahrerassistenzsystem gemäß Ausführungsformen der vorliegenden Offenbarung,
Figur 2 schematisch ein Fahrzeug mit einem Fahrerassistenzsystem gemäß Ausführungsformen der vorliegenden Offenbarung, und
Figur 3 ein Flussdiagramm eines Fahrerassistenzverfahrens gemäß Ausführungsformen der vorliegenden Offenbarung.

### Ausführungsformen der Offenbarung

Im Folgenden werden, sofern nicht anders vermerkt, für gleiche und gleichwirkende Elemente gleiche Bezugszeichen verwendet.

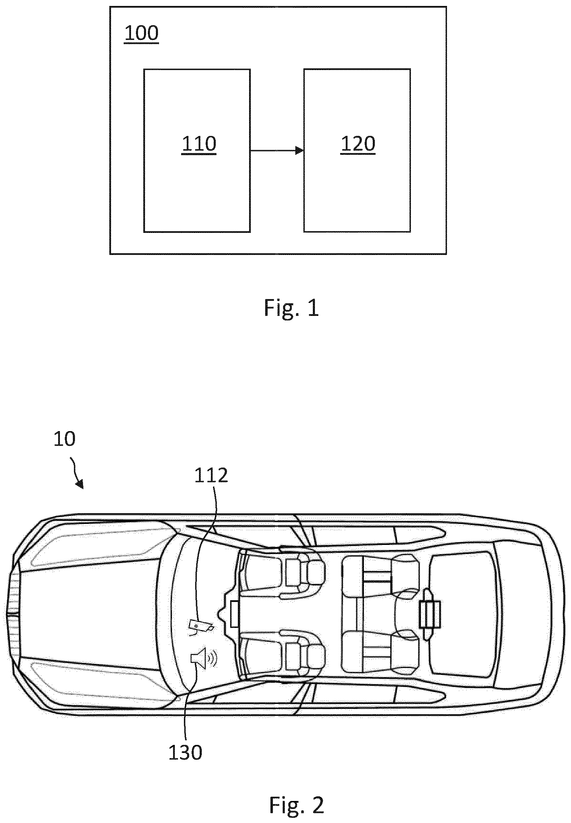

Figur 1 zeigt schematisch ein Fahrerassistenzsystem 100 für ein Fahrzeug gemäß Ausführungsformen der vorliegenden Offenbarung. Figur 2 zeigt schematisch ein Fahrzeug 10 mit einem Fahrerassistenzsystem 100 gemäß Ausführungsformen der vorliegenden Offenbarung.

Das Fahrerassistenzsystem 100 umfasst wenigstens ein Fahrererfassungsmodul 110 und wenigstens ein Prozessormodul 120. Das wenigstens eine Fahrererfassungsmodul 110 und das wenigstens eine Prozessormodul 120 können in einem gemeinsamen Software-und/oder Hardware-Modul realisiert sein. Alternativ dazu können das wenigstens eine Fahrererfassungsmodul 110 und das wenigstens eine Prozessormodul 120 jeweils in getrennten Software- und/oder Hardware-Modulen realisiert sein.

Das wenigstens eine Fahrererfassungsmodul 110 ist eingerichtet, um einen Fahrer zu erfassen. Insbesondere kann das Fahrerassistenzsystem 100 für eine Überwachung des Fahrers sowie eine Ausgabe eines Fahrerhinweises basierend auf der Überwachung eingerichtet sein. Der Fahrerhinweis kann zum Beispiel akustisch über einen Lautsprecher 130 eines Benutzerschnittstellen-Moduls des Fahrerassistenzsystems ausgegeben werden. Vorzugsweise ist der Fahrerhinweis ein Warnhinweis, insbesondere in Bezug auf ein durch das wenigstens eine Fahrererfassungsmodul 110 erfasste Verhalten des Fahrers, wie ein längeres Abwenden eines Blickes von der vor dem Fahrzeug liegenden Straße.

In einigen Ausführungsformen kann das wenigstens eine Fahrererfassungsmodul 110 wenigstens einen Sensor 112 umfassen, der eingerichtet ist, um den Fahrer z.B. optisch zu erfassen. Der wenigstens eine Sensor 112 kann ein optischer Sensor sein, wie zum Beispiel eine Kamera, insbesondere eine Innenraumkamera. Optional kann das wenigstens eine Fahrererfassungsmodul 110 wenigstens eine Lichtquelle umfassen. Die Lichtquelle kann in beispielhaften Ausführungsformen eine Infrarotlichtquelle sein, und der wenigstens eine Sensor 112 kann ein Infrarotsensor, wie zum Beispiel eine Infrarotkamera, sein.

Das wenigstens eine Prozessormodul 120 ist eingerichtet, um die durch das wenigstens eine Fahrererfassungsmodul 110 bereitgestellten Erfassungsdaten, wie zum Beispiel Bilddaten, auszuwerten. Insbesondere ist das wenigstens eine Prozessormodul 120 eingerichtet, um basierend auf den Erfassungsdaten eine Vielzahl von Einzelblicken des Fahrers weg von einer Referenzblickrichtung zu erkennen; für jeden Einzelblick der Vielzahl von Einzelblicken eine entsprechende Blickzeitdauer zu bestimmen; eine Änderung der Blickzeitdauer über die Zeit und in Bezug auf einen Schwellwert zu erkennen; und wenigstens eine Fahrzeugfunktion basierend auf der erkannten Änderung der Blickzeitdauer anzusteuern.

Beispielsweise bestimmt das wenigstens eine Prozessormodul 120 basierend auf den Erfassungsdaten, ob die Blickrichtung des Fahrers von einer Referenzblickrichtung abweicht. Vorzugsweise ist die Referenzblickrichtung eine Blickrichtung auf eine vor dem Fahrzeug liegende Fahrbahn. Falls die Blickrichtung des Fahrers von der Referenzblickrichtung abweicht, also wenn der Fahrer von der Straße wegblickt, kann dieses Ereignis als Einzelblick mit einer bestimmten Blickzeitdauer erkannt werden. Die Blickzeitdauer kann dabei angeben, wie lange der Fahrer nicht in die Referenzblickrichtung sieht bzw. wie lange der Fahrer von der Referenzblickrichtung wegsieht.

Das wenigstens eine Prozessormodul 120 bestimmt weiter, ob eine Änderung der Blickzeitdauer über die Zeit und in Bezug auf einen Schwellwert vorliegt. Insbesondere kann das wenigstens eine Prozessormodul 120 bestimmen, ob sich die Blickzeitdauer mit der Zeit, also über eine Sequenz von Einzelblicken weg von der Referenzblickrichtung, an den Schwellwert annähert. Falls eine derartige Änderung der Blickzeitdauer erkannt wird, steuert das wenigstens eine Prozessormodul 120 wenigstens eine Fahrzeugfunktion (z.B. die Ausgabe des Fahrerhinweises) an, um der erkannten Änderung, die eine negative Verhaltensanpassung des Fahrers an die Funktionsweise des Fahrerassistenzsystems 100 anzeigt, entgegenzuwirken.

Die Änderung der Blickzeitdauer kann erkannt und/oder das Ansteuern der wenigstens einen Fahrzeugfunktion durchgeführt werden, wenn die Änderung der Blickzeitdauer wenigstens ein vorgegebenes Kriterium erfüllt. Das wenigstens eine vorgegebene Kriterium kann zum Beispiel eine Richtung der Änderung der Blickzeitdauer in Bezug auf den Schwellwert (z.B. eine Richtung der Blickzeitdauer hin zum Schwellwert, d.h. eine Annäherung an den Schwellwert), eine Rate der Änderung der Blickzeitdauer (z.B. eine Schnelligkeit der Änderung der Blickzeitdauer), einen Abstand zum Schwellwert (z.B. ein relativer Abstand zum Schwellwert), etc. umfassen.

In einigen Ausführungsformen kann das wenigstens eine Prozessormodul 120 den Schwellwert für die Ausgabe des Fahrerhinweises von einem ersten Wert (z.B. einem festen Schwellwert von drei Sekunden) auf einen zweiten Wert (z.B. zwei Sekunden oder vier Sekunden) ändern, wenn die Änderung der Blickzeitdauer erkannt wird. Insbesondere kann der Schwellwert für die Ausgabe des Fahrerhinweises variiert werden, um einer Verhaltensanpassung des Fahrers an den Schwellwert der Warnungsausgabe entgegenzuwirken.

Der zweite Wert kann in einigen Ausführungsformen zufällig aus einem vorbestimmten Wertebereich ausgewählt werden. Der vorbestimmte Wertebereich kann zum Beispiel ein normalverteilter Bereich zwischen zwei und vier Sekunden sein. Ergänzend oder alternativ kann der zweite Wert basierend auf historischen Blickzeitdauern des Fahrers, insbesondere einer fahrerindividuellen historischen Einzelblickverteilung, ausgewählt werden.

In einigen Ausführungsformen ist das wenigstens eine Prozessormodul 120 weiter eingerichtet, um den Schwellwert für die Ausgabe des Fahrerhinweises vom zweiten Wert zurück auf den (festen) ersten Wert zu ändern, wenn eine rückläufige Änderung der Blickzeitdauer erkannt wird. Insbesondere kann überprüft werden, ob eine Häufung der Blickzeitdauern um den ursprünglichen Schwellwert über einen definierten Zeitraum rückgängig ist. Ist dies der Fall, kann der ursprüngliche feste Schwellwert (z.B. drei Sekunden) wieder angenommen werden. Das Fahrerassistenzsystem 100 kann anschließend wieder eine Verschiebung der Blickzeitdauern hin zum Schwellwert überwachen.

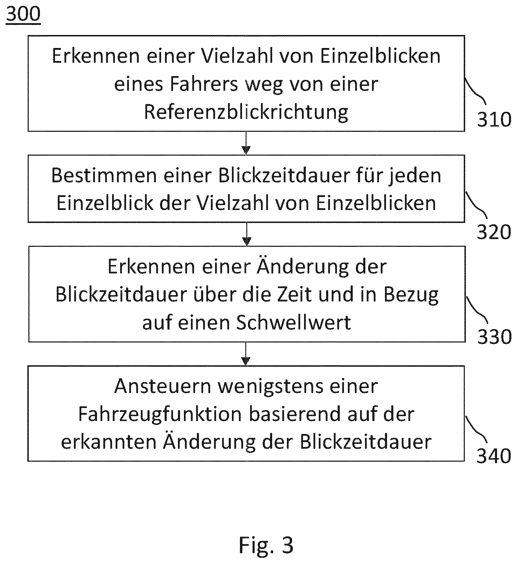

Figur 3 zeigt schematisch ein Flussdiagramm eines Fahrerassistenzverfahrens 300 gemäß Ausführungsformen der vorliegenden Offenbarung. Das Fahrerassistenzverfahren 300 kann durch eine entsprechende Software implementiert werden, die durch einen oder mehrere Prozessoren (z.B. eine CPU) ausführbar ist.

Das Fahrerassistenzverfahren 300 umfasst im Block 310 ein Erkennen einer Vielzahl von Einzelblicken eines Fahrers weg von einer Referenzblickrichtung; im Block 320 ein Bestimmen einer Blickzeitdauer für jeden Einzelblick der Vielzahl von Einzelblicken; im Block 330 ein Erkennen einer Änderung der Blickzeitdauer über die Zeit und in Bezug auf einen Schwellwert; und im Block 340 ein Ansteuern wenigstens einer Fahrzeugfunktion, wie z.B. einer Ausgabe eines Fahrerhinweises, basierend auf der erkannten Änderung der Blickzeitdauer.

Erfindungsgemäß erfolgt eine Überwachung einer Blickzeitdauer des Fahrers z.B. weg von der Straße. Falls eine Änderung der Blickzeitdauer erkannt wird, beispielsweise da sich die Blickzeitdauer an einen Schwellwert zur Ausgabe von Fahrerhinweisen bzw. Warnungen angleicht, können geeignete Gegenmaßnahmen ergriffen werden. Zum Beispiel kann der Schwellwert zur Ausgabe von Fahrerhinweisen variiert werden, so dass sich der Fahrer nicht mehr darauf verlassen kann, dass die Fahrerhinweise nach einer bestimmten Zeit ausgegeben werden. Damit kann sichergestellt werden, dass keine negative Verhaltensanpassung des Fahrers an die Funktionsweise des Fahrerassistenzsystems erfolgt. Im Ergebnis kann eine Sicherheit im Straßenverkehr verbessert werden.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

## Patentansprüche

1. Fahrerassistenzsystem (100) für ein Fahrzeug, umfassend:
wenigstens ein Fahrererfassungsmodul (110), das eingerichtet ist, um einen Fahrer zu erfassen und Erfassungsdaten bereitzustellen;
wenigstens ein Prozessormodul (120), das eingerichtet ist, um:
basierend auf den Erfassungsdaten eine Vielzahl von Einzelblicken des Fahrers weg von einer Referenzblickrichtung zu erkennen;
für jeden Einzelblick der Vielzahl von Einzelblicken eine entsprechende Blickzeitdauer zu bestimmen;
**dadurch gekennzeichnet, dass** das Prozessormodul (120) zudem eingerichtet ist,
eine Änderung der Blickzeitdauer über die Zeit und in Bezug auf einen Schwellwert zu erkennen; und
wenigstens eine Fahrzeugfunktion basierend auf der erkannten Änderung der Blickzeitdauer anzusteuern.

2. Das Fahrerassistenzsystem (100) nach Anspruch 1, wobei die wenigstens eine Fahrzeugfunktion eine Ausgabe eines Fahrerhinweis an den Fahrer betrifft oder ist.

3. Das Fahrerassistenzsystem (100) nach Anspruch 1 oder 2, wobei der Schwellwert eine Zeitspanne zwischen einem Wegblicken des Fahrers von der Referenzblickrichtung und dem Ansteuern der wenigstens einen Fahrzeugfunktion, insbesondere dem Ausgeben des Fahrerhinweises, angibt.

4. Das Fahrerassistenzsystem (100) nach einem der Ansprüche 1 bis 3, wobei das wenigstens eine Prozessormodul (120) weiter eingerichtet ist, um den Schwellwert von einem ersten Wert auf einen vom ersten Wert verschiedenen zweiten Wert zu ändern, wenn die Änderung der Blickzeitdauer erkannt wird.

5. Das Fahrerassistenzsystem (100) nach Anspruch 4, wobei das wenigstens eine Prozessormodul (120) eingerichtet ist, um den Schwellwert vom ersten Wert auf den zweiten Wert zu ändern, wenn sich die Blickzeitdauer in Richtung des Schwellwerts ändert.

6. Das Fahrerassistenzsystem (100) nach Anspruch 4 oder 5, wobei das wenigstens eine Prozessormodul (120) eingerichtet ist, um:
den zweiten Wert zufällig aus einem vorbestimmten Wertebereich auszuwählen; und/oder
den zweiten Wert basierend auf historischen Blickzeitdauern des Fahrers auszuwählen.

7. Das Fahrerassistenzsystem (100) nach einem der Ansprüche 4 bis 6, wobei das wenigstens eine Prozessormodul (120) weiter eingerichtet ist, um den Schwellwert vom zweiten Wert zurück auf den ersten Wert zu ändern, wenn eine rückläufige Änderung der Blickzeitdauer erkannt wird.

8. Fahrzeug (10), insbesondere Kraftfahrzeug, umfassend das Fahrerassistenzsystem (100) nach einem der Ansprüche 1 bis 7.

9. Fahrerassistenzverfahren (300) für ein Fahrzeug, umfassend:
Erkennen (310) einer Vielzahl von Einzelblicken eines Fahrers weg von einer Referenzblickrichtung;
Bestimmen (320) einer Blickzeitdauer für jeden Einzelblick der Vielzahl von Einzelblicken;
**gekennzeichnet durch**:
Erkennen (330) einer Änderung der Blickzeitdauer über die Zeit und in Bezug auf einen Schwellwert; und
Ansteuern (340) wenigstens einer Fahrzeugfunktion basierend auf der erkannten Änderung der Blickzeitdauer.

10. Speichermedium, umfassend ein Software-Programm, das eingerichtet ist, um auf einem oder mehreren Prozessoren ausgeführt zu werden, und um dadurch das Fahrerassistenzverfahren (300) gemäß Anspruch 9 auszuführen.

11. Software-Programm, das eingerichtet ist, um auf einem oder mehreren Prozessoren ausgeführt zu werden, und um dadurch das Fahrerassistenzverfahren (300) gemäß Anspruch 9 auszuführen.

## Claims

1. Driver assistance system (100) for a vehicle, comprising:
at least one driver detection module (110) configured to detect a driver and provide detection data;
at least one processor module (120) configured to:
based on the detection data, recognize a plurality of individual glances of the driver away from a reference gaze direction;
determine a corresponding gaze duration for each individual glance of the plurality of individual glances;
**characterized in that** the processor module (120) is further configured to recognize a change in the gaze duration over time and in relation to a threshold value; and
control at least one vehicle function based on the recognized change in the gaze duration.

2. The driver assistance system (100) according to claim 1, wherein the at least one vehicle function concerns or is an output of a driver notification to the driver.

3. The driver assistance system (100) according to claim 1 or 2, wherein the threshold value indicates a time span between the driver looking away from the reference gaze direction and the controlling of the at least one vehicle function, in particular the outputting of the driver notification.

4. The driver assistance system (100) according to any one of claims 1 to 3, wherein the at least one processor module (120) is further configured to change the threshold value from a first value to a second value different from the first value when the change in gaze duration is recognized.

5. The driver assistance system (100) according to claim 4, wherein the at least one processor module (120) is configured to change the threshold value from the first value to the second value when the gaze duration changes towards the threshold value.

6. The driver assistance system (100) according to claim 4 or 5, wherein the at least one processor module (120) is configured to:
randomly select the second value from a predetermined range of values; and/or
select the second value based on historical gaze durations of the driver.

7. The driver assistance system (100) according to any one of claims 4 to 6, wherein the at least one processor module (120) is further configured to change the threshold value from the second value back to the first value when a reverse change in gaze duration is recognized.

8. Vehicle (10), in particular motor vehicle, comprising the driver assistance system (100) according to any one of claims 1 to 7.

9. Driver assistance method (300) for a vehicle, comprising:
recognizing (310) a plurality of individual glances of a driver away from a reference gaze direction;
determining (320) a gaze duration for each individual glance of the plurality of individual glances;
**characterized by**:
recognizing (330) a change in the gaze duration over time and in relation to a threshold value; and
controlling (340) at least one vehicle function based on the recognized change in the gaze duration.

10. Storage medium comprising a software program configured to be executed on one or more processors and thereby execute the driver assistance method (300) according to claim 9.

11. Software program configured to be executed on one or more processors and thereby execute the driver assistance method (300) according to claim 9.

## Revendications

1. Système d'assistance au conducteur (100) pour un véhicule, comprenant :
au moins un module de détection du conducteur (110) configuré pour détecter un conducteur et fournir des données de détection ;
au moins un module de processeur (120) configuré pour :
sur la base des données de détection, reconnaître une pluralité de regards individuels du conducteur divergents d'une direction de regard de référence ;
déterminer une durée de regard correspondante pour chaque regard individuel de la pluralité de regards individuels ;
**caractérisé en ce que** le module de processeur (120) est en outre configuré pour reconnaître un changement de la durée de regard au fil du temps et par rapport à une valeur seuil ; et
contrôler au moins une fonction du véhicule sur la base du changement reconnu de la durée de regard.

2. Système d'assistance au conducteur (100) selon la revendication 1, dans lequel l'au moins une fonction du véhicule concerne ou est une sortie d'une notification au conducteur.

3. Système d'assistance au conducteur (100) selon la revendication 1 ou 2, dans lequel la valeur seuil indique une période de temps entre le moment où le conducteur détourne son regard de la direction de regard de référence et le contrôle de l'au moins une fonction du véhicule, en particulier la sortie de la notification au conducteur.

4. Système d'assistance au conducteur (100) selon l'une quelconque des revendications 1 à 3, dans lequel l'au moins un module de processeur (120) est en outre configuré pour modifier la valeur seuil d'une première valeur à une deuxième valeur différente de la première valeur lorsque le changement de durée de regard est reconnu.

5. Système d'assistance au conducteur (100) selon la revendication 4, dans lequel l'au moins un module de processeur (120) est configuré pour modifier la valeur seuil de la première valeur à la deuxième valeur lorsque la durée de regard change vers la valeur seuil.

6. Système d'assistance au conducteur (100) selon la revendication 4 ou 5, dans lequel l'au moins un module de processeur (120) est configuré pour :
sélectionner aléatoirement la deuxième valeur dans une plage de valeurs prédéterminée ; et/ou
sélectionner la deuxième valeur sur la base des durées de regard historiques du conducteur.

7. Système d'assistance au conducteur (100) selon l'une quelconque des revendications 4 à 6, dans lequel l'au moins un module de processeur (120) est en outre configuré pour modifier la valeur seuil de la deuxième valeur à la première valeur lorsqu'un changement inverse de la durée de regard est reconnu.

8. Véhicule (10), en particulier véhicule automobile, comprenant le système d'assistance au conducteur (100) selon l'une quelconque des revendications 1 à 7.

9. Procédé d'assistance au conducteur (300) pour un véhicule, comprenant :
la reconnaissance (310) d'une pluralité de regards individuels d'un conducteur divergents d'une direction de regard de référence ;
la détermination (320) d'une durée de regard pour chaque regard individuel de la pluralité de regards individuels ;
**caractérisé par** :
la reconnaissance (330) d'un changement de la durée de regard au fil du temps et par rapport à une valeur seuil ; et
le contrôle (340) d'au moins une fonction du véhicule sur la base du changement reconnu de la durée de regard.

10. Support de stockage comprenant un programme logiciel configuré pour être exécuté sur un ou plusieurs processeurs et ainsi exécuter le procédé d'assistance au conducteur (300) selon la revendication 9.

11. Programme logiciel configuré pour être exécuté sur un ou plusieurs processeurs et ainsi exécuter le procédé d'assistance au conducteur (300) selon la revendication 9.
